# EUROPÄISCHE PATENTSCHRIFT

(11) **EP 2 657 485 B1**
(45) Veröffentlichungstag und Bekanntmachung des Hinweises auf die Patenterteilung: **05.08.2015**
(21) Anmeldenummer: 12165336.4
(22) Anmeldetag: 24.04.2012
(51) Int. Cl.: F02D 17/02, F02D 15/04, F02D 41/00

(54) **Verfahren zum Betreiben einer fremdgezündeten Brennkraftmaschine mit Teilabschaltung**
Method for operating an externally ignited combustion engine with partial shut-down
Procédé de fonctionnement d'un moteur à combustion à allumage commandé doté d'un arrêt sélectif

(43) Veröffentlichungstag der Anmeldung: 30.10.2013
(73) Patentinhaber: Ford Global Technologies, LLC, Dearborn, MI 48126 (US)
(72) Erfinder: Breuer, Albert, 50769 Köln (DE); Linsel, Jan, 50767 Köln (DE); Lorenz, Thomas, 50737 Köln (DE); Ruhland, Helmut, 52249 Eschweiler (DE); Springer, Klaus Moritz, 58095 Hagen (DE)
(74) Vertreter: Drömer, Hans-Carsten

(56) Entgegenhaltungen:
- WO-A1-2010/003675
- DE-A1- 3 121 302
- DE-C- 665 392
- GB-A- 2 478 718
- US-A- 4 051 673
- US-A- 4 455 984
- US-A- 4 473 044
- US-A1- 2007 131 183

## Beschreibung

Die Erfindung betrifft ein Verfahren zum Betreiben einer fremdgezündeten Brennkraftmaschine mit mindestens zwei Zylindern, bei der mindestens zwei Zylinder in der Art konfiguriert sind, dass sie mindestens zwei Gruppen mit jeweils mindestens einem Zylinder bilden, wobei
- der mindestens eine Zylinder mindestens einer Gruppe als lastabhängig zuschaltbarer Zylinder ausgebildet ist, der bei Unterschreiten einer vorgebbaren Last abgeschaltet ist,
- sich die mindestens zwei Gruppen durch unterschiedliche Zylindervolumen *Vᵢ* auszeichnen,
- der mindestens eine Zylinder einer ersten Gruppe ein Zylindervolumen *V₁* aufweist und der mindestens eine Zylinder einer zweiten Gruppe ein Zylindervolumen *V₂* aufweist mit *V₂* > *V₁*, und
- der mindestens eine Zylinder der zweiten Gruppe als zuschaltbarer Zylinder ausgebildet ist,
bei dem der mindestens eine Zylinder der zweiten Gruppe
- bei Unterschreiten einer vorgebbaren Last *T_{down}* abgeschaltet wird, und
- bei Überschreiten einer vorgebbaren Last *Tᵤₚ* zugeschaltet wird.

Eine Brennkraftmaschineder vorstehend genannten Art beschreibt beispielsweise die internationale Anmeldung WO 2010/003675 A1.

Bei der Entwicklung von Brennkraftmaschinen ist es ein grundsätzliches Ziel, den Kraftstoffverbrauch zu minimieren, wobei ein verbesserter Gesamtwirkungsgrad im Vordergrund der Bemühungen steht.

Problematisch sind der Kraftstoffverbrauch und damit der Wirkungsgrad insbesondere bei Ottomotoren, d. h. bei einer fremdgezündeten Brennkraftmaschine. Der Grund hierfür liegt im prinzipiellen Arbeitsverfahren des Ottomotors.

Der Ottomotor arbeitet - sofern keine Direkteinspritzung vorliegt - mit einem homogenen Brennstoff-Luft-Gemisch, das durch äußere Gemischbildung aufbereitet wird, indem in die angesaugte Luft im Ansaugtrakt Kraftstoff eingebracht wird. Die Laststeuerung erfolgt in der Regel mittels einer im Ansaugtrakt vorgesehenen Drosselklappe. Durch Verstellen der Drosselklappe kann der Druck der angesaugten Luft hinter der Drosselklappe mehr oder weniger stark reduziert werden. Je weiter die Drosselklappe geschlossen ist, d. h. je mehr diese den Ansaugtrakt versperrt, desto höher ist der Druckverlust der angesaugten Luft über die Drosselklappe hinweg und desto geringer ist der Druck der angesaugten Luft stromabwärts der Drosselklappe und vor dem Einlaß in die mindestens zwei Zylinder, d. h. Brennräume. Bei konstantem Brennraumvolumen kann auf diese Weise über den Druck der angesaugten Luft die Luftmasse, d. h. die Quantität eingestellt werden. Dies erklärt auch, weshalb sich diese Art der Quantitätsregelung gerade im Teillastbereich als nachteilig erweist, denn geringe Lasten erfordern eine hohe Drosselung und Druckabsenkung im Ansaugtrakt, wodurch die Ladungswechselverluste mit abnehmender Last und zunehmender Drosselung steigen.

Um die beschriebenen Verluste zu senken, wurden verschiedene Strategien zur Entdrosselung einer fremdgezündeten Brennkraftmaschine entwickelt.

Aufgrund der Tatsache, dass der Ottomotor im Teillastbetrieb infolge Drosselung einen schlechten Wirkungsgrad, der Dieselmotor hingegen aufgrund der Qualitätsregelung einen höheren Wirkungsgrad, d. h. einen niedrigeren Kraftstoffverbrauch aufweist, wurden Versuche unternommen, beide Arbeitsverfahren miteinander zu kombinieren, um die Vorteile des dieselmotorischen Verfahrens für das ottomotorische Verfahren nutzbar zu machen. Dabei konzentrierten sich die Entwicklungsarbeiten in erster Linie auf die wesentlichen Merkmale der beiden Verfahren.

Das herkömmliche ottomotorische Verfahren ist gekennzeichnet durch eine Gemischverdichtung, ein homogenes Gemisch, eine Fremdzündung, sowie die Quantitätsregelung, wohingegen das traditionelle dieselmotorische Verfahren charakterisiert ist durch eine Luftverdichtung, ein inhomogenes Gemisch, eine Selbstzündung und die Qualitätsregelung.

Ein Lösungsansatz zur Entdrosselung des Ottomotors ist beispielsweise ein ottomotorisches Arbeitsverfahren mit Direkteinspritzung. Die direkte Einspritzung des Kraftstoffes ist ein geeignetes Mittel zur Realisierung einer geschichteten Brennraumladung. Die Direkteinspritzung des Kraftstoffes in den Brennraum ermöglicht damit in gewissen Grenzen eine Qualitätsregelung beim Ottomotor.

Die Gemischbildung erfolgt durch die direkte Einspritzung des Kraftstoffes in die Zylinder bzw. in die in den Zylindern befindliche Luft und nicht durch äußere Gemischbildung, bei der der Kraftstoff im Ansaugtrakt in die angesaugte Luft eingebracht wird.

Eine andere Möglichkeit, den Verbrennungsprozeß eines Ottomotors zu optimieren, besteht in der Verwendung eines zumindest teilweise variablen Ventiltriebs. Im Gegensatz zu konventionellen Ventiltrieben, bei denen sowohl der Hub der Ventile als auch die Steuerzeiten nicht veränderlich sind, können diese den Verbrennungsprozeß und damit den Kraftstoffverbrauch beeinflussenden Parameter mittels variabler Ventiltriebe mehr oder weniger stark variiert werden. Die ideale Lösung wäre eine voll variable Ventilsteuerung, die für jeden beliebigen Betriebspunkt des Ottomotors speziell abgestimmte Werte für den Hub und die Steuerzeiten zuläßt. Spürbare Kraftstoffeinsparungen können aber auch mit nur teilweise variablen Ventiltrieben erzielt werden. Eine drosselfreie und damit verlustfreie Laststeuerung ist bereits möglich, wenn die Schließzeit des Einlaßventils und der Einlaßventilhub variiert werden können. Die während des Ansaugvorganges in den Brennraum einströmende Gemischmasse wird dann nicht mittels Drosselklappe, sondern über den Einlaßventilhub und die Öffnungsdauer des Einlaßventils gesteuert.

Ein weiterer Lösungsansatz zur Entdrosselung eines Ottomotors bietet die Zylinderabschaltung, d. h. die Abschaltung einzelner Zylinder in bestimmten Lastbereichen. Der Wirkungsgrad des Ottomotors im Teillastbetrieb kann durch eine Teilabschaltung verbessert, d. h. erhöht werden, denn die Abschaltung eines Zylinders einer Mehrzylinder-Brennkraftmaschine erhöht bei konstanter Motorleistung die Belastung der übrigen noch in Betrieb befindlichen Zylinder, so dass die Drosselklappe zum Einbringen einer größeren Luftmasse in diese Zylinder weiter geöffnet werden kann bzw. muß, wodurch insgesamt eine Entdrosselung der Brennkraftmaschine erreicht wird. Die ständig in Betrieb befindlichen Zylinder arbeiten während der Teilabschaltung, d. h. bei Teillast, zudem häufig im Bereich höherer Lasten, bei denen der spezifische Kraftstoffverbrauch niedriger ist. Das Lastkollektiv wird zu höheren Lasten hin verschoben.

Die während der Teilabschaltung weiter betriebenen Zylinder weisen zudem aufgrund der größeren zugeführten Luftmasse eine verbesserte Gemischbildung auf und tolerieren höhere Abgasrückführraten.

Weitere Wirkungsgradvorteile ergeben sich dadurch, dass ein abgeschalteter Zylinder infolge der fehlenden Verbrennung keine Wandwärmeverluste infolge eines Wärmeüberganges von den Verbrennungsgasen an die Brennraumwände generiert.

Die im Stand der Technik beschriebenen Mehrzylinder-Brennkraftmaschinen mit Teilabschaltung und die dazugehörigen Verfahren zum Betreiben dieser Brennkraftmaschinen weisen dennoch deutliches Verbesserungspotential auf.

Vor diesem Hintergrund ist es die Aufgabe der vorliegenden Erfindung, ein Verfahren zum Betreiben einer Brennkraftmaschine gemäß dem Oberbegriff des Anspruchs 1 aufzuzeigen, mit dem die Teilabschaltung optimiert wird.

Gelöst wird diese Aufgabe durch ein Verfahren zum Betreiben einer fremdgezündeten Brennkraftmaschine mit mindestens zwei Zylindern, bei der mindestens zwei Zylinder in der Art konfiguriert sind, dass sie mindestens zwei Gruppen mit jeweils mindestens einem Zylinder bilden, wobei
- der mindestens eine Zylinder mindestens einer Gruppe als lastabhängig zuschaltbarer Zylinder ausgebildet ist, der bei Unterschreiten einer vorgebbaren Last abgeschaltet ist,
- sich die mindestens zwei Gruppen durch unterschiedliche Zylindervolumen *Vᵢ* auszeichnen,
- der mindestens eine Zylinder einer ersten Gruppe ein Zylindervolumen *V₁* aufweist und der mindestens eine Zylinder einer zweiten Gruppe ein Zylindervolumen *V₂* aufweist mit *V₂* > *V₁*, und
- der mindestens eine Zylinder der zweiten Gruppe als zuschaltbarer Zylinder ausgebildet ist,
bei dem der mindestens eine Zylinder der zweiten Gruppe
- bei Unterschreiten einer vorgebbaren Last *T_{down}* abgeschaltet wird, und
- bei Überschreiten einer vorgebbaren Last *Tᵤₚ* zugeschaltet wird,
und das dadurch gekennzeichnet ist, dass
- sich die mindestens zwei Gruppen durch unterschiedliche Verdichtungsverhältnisse ε*ᵢ* auszeichnen, wobei der mindestens eine Zylinder der ersten Gruppe ein Verdichtungsverhältnis ε*₁* aufweist und der mindestens eine Zylinder der zweiten Gruppe ein Verdichtungsverhältnis ε*₂* aufweist mit ε*₂* < ε*₁*,
- das Luftverhältnis λ zumindest einer Zylindergruppe zu hohen Lasten *T_{high}* hin verringert wird, wobei eine hohe Last *T_{high}* eine Last ist, die 70% oder mehr der maximalen Last *T_{max,n}* bei der vorliegenden Drehzahl *n* beträgt und das Luftverhältnis λ durch Erhöhung der eingespritzten Kraftstoffmenge verringert wird, und
- die Zylinder der mindestens zwei Zylindergruppen zumindest in einem Lastbereich mit einem unterschiedlich großen Luftverhältnis λ betrieben werden, wobei der mindestens eine Zylinder der ersten Gruppe mit einem Luftverhältnis λ*₁* betrieben wird und der mindestens eine Zylinder der zweiten Gruppe mit einem Luftverhältnis λ*₂* > λ*₁* betrieben wird.

Im Teillastbetrieb der Brennkraftmaschine wird der mindestens eine Zylinder der zweiten Gruppe bei Unterschreiten einer vorgebbaren Last abgeschaltet, wodurch sich die Lastanforderung an den mindestens einen verbliebenen Zylinder erhöht und ein Öffnen der Drosselklappe zum Einbringen einer größeren Luftmasse in diesen Zylinder erforderlich wird.

Neben diesem aus dem Stand der Technik bekannten Effekt, der zur Entdrosselung der Brennkraftmaschine beiträgt, wird die Teilabschaltung im Teillastbetrieb durch ein konstruktives Merkmal der erfindungsgemäßen Brennkraftmaschine weiter optimiert, nämlich dadurch, dass die Gruppe der ständig in Betrieb befindlichen Zylinder und die Gruppe der zuschalt- bzw. abschaltbaren Zylinder bei der erfindungsgemäßen Brennkraftmaschine ein unterschiedliches Zylindervolumen *Vᵢ* aufweisen.

Vorliegend haben die ständig in Betrieb befindlichen Zylinder der ersten Gruppe ein kleineres Zylindervolumen *V₁*, so dass diese Zylinder im Teillastbetrieb der Brennkraftmaschine bei abgeschalteter zweiter Zylindergruppe einen spürbar höheren Wirkungsgrad η aufweisen, insbesondere einen höheren Wirkungsgrad, als wenn diese Zylinder das größere Zylindervolumen *V₂* der zuschaltbaren Zylinder hätten. Zu berücksichtigen ist dabei, dass die Drosselklappe infolge des kleineren Zylindervolumens *V₁* im Teillastbetrieb der Brennkraftmaschine weiter geöffnet wird, um die erforderliche Luftmasse in die Zylinder der ersten Gruppe einzubringen. Hierdurch wird die Brennkraftmaschine insgesamt entdrosselt. Die ständig in Betrieb befindlichen Zylinder arbeiten während der Teilabschaltung auch bei Teillast zudem häufig im Bereich höherer Lasten, bei denen der spezifische Kraftstoffverbrauch niedriger ist. Das Lastkollektiv wird zu höheren Lasten hin verschoben.

Die unterschiedlichen Zylindervolumina *Vᵢ* sind das Resultat der Auslegung der Zylindergruppen auf unterschiedliche Betriebs- bzw. Lastbereiche. Während die ständig in Betrieb befindlichen Zylinder auf den Teillastbetrieb der Brennkraftmaschine ausgelegt sind, erfolgt die Auslegung der Gruppe der zuschaltbaren Zylinder auf höhere, hohe und höchste Lasten.

Die zuschaltbaren Zylinder, d. h. die Zylinder, die bei steigender Lastanforderung zugeschaltet werden, sind auf hohe Lasten ausgelegt und daher mit einem großen bzw. größeren Zylindervolumen *V₂* ausgebildet, um die für hohe Lasten erforderliche große Gemischmenge aufnehmen zu können.

Die Zylindergruppen können sich auch in anderen Betriebsparametern oder Konstruktionsmerkmalen, beispielsweise der Kühlung, dem Brennverfahren, den Einlaßkanälen, den Auslaßkanälen, den Einspritzdüsen und/oder den Zündvorrichtungen voneinander unterscheiden.

Erfindungsgemäß zeichnen sich die mindestens zwei Gruppen der fremdgezündeten Brennkraftmaschine zusätzlich durch unterschiedliche Verdichtungsverhältnisse ε*ᵢ* aus, wobei der mindestens eine Zylinder der ersten Gruppe ein Verdichtungsverhältnis ε*₁* aufweist und der mindestens eine Zylinder der zweiten Gruppe ein Verdichtungsverhältnis ε*₂* aufweist mit ε*₂* < ε*₁*.

Die Ausstattung der beiden Zylindergruppen mit unterschiedlichen Verdichtungsverhältnissen ε*ᵢ* dient wiederum der Optimierung der Teilabschaltung im Teillastbetrieb. Hierzu wird abermals ein konstruktives Merkmal der Brennkraftmaschine bzw. der Zylinder, nämlich das Verdichtungsverhältnis ε*ᵢ* herangezogen und zwar zusätzlich zu den verschiedenen Zylindervolumina *Vᵢ*.

Vorliegend haben die ständig in Betrieb befindlichen Zylinder der ersten Gruppe ein höheres Verdichtungsverhältnis ε*₁*, so dass diese Zylinder im Teillastbetrieb einen spürbar höheren Wirkungsgrad η aufweisen, insbesondere einen höheren Wirkungsgrad, als wenn diese Zylinder das niedrigere Verdichtungsverhältnis ε*₂* der zuschaltbaren Zylinder hätten. Zu berücksichtigen ist dabei, dass der Wirkungsgrad η mit dem Verdichtungsverhältnis ε*ᵢ* mehr oder weniger korreliert, d. h. der Wirkungsgrad η bei einem größeren Verdichtungsverhältnis ε*ᵢ* in der Regel höher ist und bei einem kleineren Verdichtungsverhältnis ε*ᵢ* in der Regel niedriger ist. Zu sehr hohen Verdichtungsverhältnissen hin kann sich dieser grundsätzliche Zusammenhang aber auflösen, da dann unter anderem der Blow-by stark zunimmt, was sich nachteilig auf den Wirkungsgrad auswirkt.

Die unterschiedlichen Verdichtungsverhältnisse ε*ᵢ* sind das Resultat der Auslegung der Zylindergruppen auf unterschiedliche Betriebs- bzw. Lastbereiche. Während die ständig in Betrieb befindlichen Zylinder auf den Teillastbetrieb der Brennkraftmaschine ausgelegt sind, erfolgt die Auslegung der Gruppe der zuschaltbaren Zylinder auf höhere, hohe und höchste Lasten.

Die ständig in Betrieb befindlichen Zylinder der ersten Gruppe können mit einem höheren Verdichtungsverhältnis ε*₁* ausgestattet und damit auf einen optimierten Teillastbetrieb der Brennkraftmaschine ausgelegt werden, da eine erhöhte Klopfneigung in diesem Lastbereich nicht zu befürchten ist. Hingegen werden die zuschaltbaren Zylinder, d. h. die Zylinder, die bei steigender Lastanforderung zugeschaltet werden, auf hohe Lasten ausgelegt. Diese Zylinder sind erfindungsgemäß mit einem niedrigeren Verdichtungsverhältnis auszustatten, da die Klopfneigung nicht nur mit dem Verdichtungsverhältnis, sondern auch mit zunehmender Last steigt. Dies mindert zwar den Wirkungsgrad dieser Zylindergruppe, bietet aber die erforderliche Sicherheit gegen Klopfen bei hohen Lasten, bei denen diese Zylinder vorwiegend eingesetzt werden.

Aus dem zuvor Gesagten ergibt sich auch, dass die Brennkraftmaschine nicht nur einen höheren Wirkungsgrad η im Teillastbetrieb, sondern vielmehr auch im Bereich höherer Lasten aufweist, da die ständig in Betrieb befindlichen Zylinder mit ihrem höheren Verdichtungsverhältnis ε*₁* auch in diesem Lastbereich betrieben werden und zu einem höheren Gesamtwirkungsgrad der Brennkraftmaschine beitragen.

Der - aufgrund des höheren Verdichtungsverhältnis ε*₁* - erhöhten Klopfneigung der ständig in Betrieb befindlichen Zylinder muß gegebenenfalls bei höheren Lasten durch die Wahl geeigneter Betriebsparameter Rechnung getragen werden, beispielsweise durch ein entsprechend gewähltes Luftverhältnis λ*₁*, welches auch von dem Luftverhältnis λ*₂* der zuschaltbaren Zylinder abweichen kann, aber nicht muß.

Daher sieht das erfindungsgemäße Verfahren auch vor, die Zylinder der mindestens zwei Zylindergruppen zumindest in einem Lastbereich mit einem unterschiedlich großen Luftverhältnis λ betreiben, wobei der mindestens eine Zylinder der ersten Gruppe mit einem Luftverhältnis λ*₁* betrieben wird und der mindestens eine Zylinder der zweiten Gruppe mit einem Luftverhältnis λ*₂* > λ*₁* betrieben wird.

Zudem wird das Luftverhältnis λ zumindest einer Zylindergruppe zu hohen Lasten *T_{high}* hin verringert, wobei eine hohe Last *T_{high}* eine Last ist, die 70% oder mehr der maximalen Last *T_{max,n}* bei der vorliegenden Drehzahl *n* beträgt.

Um eine klopfende Verbrennung sicher zu vermeiden, kann eine Anfettung (λ < *1*) notwendig werden, wenn eine erhöhte Klopfneigung besteht, d. h. insbesondere bei hohen Lasten und hohen Temperaturen. Dies kann insbesondere bei den Zylindern mit dem höheren Verdichtungsverhältnis ε*₁* erforderlich werden. Dabei wird mehr Kraftstoff eingespritzt als mit der bereitgestellten Luftmenge überhaupt verbrannt werden kann, wobei der überschüssige Kraftstoff ebenfalls erwärmt und verdampft wird, so dass die Temperatur im Zylinder sinkt. Diese Vorgehensweise ist zwar unter energetischen Aspekten, insbesondere hinsichtlich des Kraftstoffverbrauchs der Brennkraftmaschine, und hinsichtlich der Schadstoffemissionen als nachteilig anzusehen, aber dennoch zielführend bzw. zulässig, um ein Klopfen zu vermeiden bzw. Bauteile zu schützen.

Das Luftverhältnis λ wird erfindungsgemäß durch Erhöhung der eingespritzten Kraftstoffmenge verringert. Grundsätzlich könnte das Luftverhältnis λ auch durch Reduzierung der bereitgestellten Luftmasse verringert werden. Nachteilig an einer derartigen Vorgehensweise ist aber, dass mit der Reduzierung der Luftmasse prinzipbedingt ein Leistungsverlust verbunden ist. Daher ist es zu präferieren, das Luftverhältnis λ durch Erhöhung der eingespritzten Kraftstoffmenge zu verringern.

Bei einem Ottomotor mit Direkteinspritzung, bei dem jeder Zylinder mit einem Injektor zur Einspritzung von Kraftstoff ausgestattet ist, werden die Injektoren einzeln mittels Motorsteuerung gesteuert und das Luftverhältnisses λ über die eingespritzte Kraftstoffmenge eingestellt. Zur Einstellung der zugeführten Luftmenge und damit der Last ist im Ansaugsystem eine Drosselklappe vorgesehen, die ebenfalls von der Motorsteuerung gesteuert bzw. geregelt wird.

Folglich ist es problemlos möglich, die Zylinder bzw. die Zylindergruppen mit einem unterschiedlichen Luftverhältnis zu betreiben.

Mit dem erfindungsgemäßen Verfahren wird ein Verfahren zum Betreiben einer fremdgezündeten Brennkraftmaschine gemäß dem Oberbegriff des Anspruchs 1 aufgezeigt, mit dem die Teilabschaltung optimiert wird. Damit wird die der Erfmdung zugrunde liegende Aufgabe gelöst.

Die Brennkraftmaschine hat mindestens zwei Zylinder bzw. mindestens zwei Gruppen mit jeweils mindestens einem Zylinder. Insofern sind Brennkraftmaschinen mit drei Zylindern, die in drei Gruppen mit jeweils einem Zylinder konfiguriert sind, oder Brennkraftmaschinen mit sechs Zylindern, die in drei Gruppen mit jeweils zwei Zylindern konfiguriert sind, ebenfalls erfindungsgemäße Brennkraftmaschinen. Die drei Zylindergruppen können unterschiedliche Zylindervolumina *Vᵢ* aufweisen und im Rahmen einer Teilabschaltung sukzessive zugeschaltet bzw. abgeschaltet werden. Die Teilabschaltung wird dadurch weiter optimiert. Die Zylindergruppen können auch eine unterschiedliche Anzahl an Zylindern umfassen.

Die für das Unterschreiten bzw. Überschreiten vorgegebenen Grenzlasten *T_{down}* und *Tᵤₚ* können gleich groß, aber auch verschieden groß sein.

Vorteilhaft sind Verfahrensvarianten, bei denen der mindestens eine Zylinder der zweiten Gruppe abgeschaltet wird, sobald die vorgegebene Last *T_{down}* unterschritten wird und die momentane Last für eine vorgebbare Zeitspanne Δ*t₁* niedriger ist als diese vorgegebene Last *T_{down}.*

Die Einführung einer zusätzlichen Bedingung für das Abschalten der Zylinder der zweiten Gruppe, d. h. die Teilabschaltung, soll ein zu häufiges An- und Abschalten verhindern, insbesondere eine Teilabschaltung, wenn die Last nur kurzzeitig die vorgegebene Last *T_{down}* unterschreitet und dann wieder steigt bzw. um den vorgegebenen Wert für die Last *T_{down}* schwankt, ohne dass das Unterschreiten eine Teilabschaltung rechtfertigen bzw. erfordern würde.

Aus diesen Gründen sind ebenfalls Verfahrensvarianten vorteilhaft, bei denen der mindestens eine Zylinder der zweiten Gruppe zugeschaltet wird, sobald die vorgegebene Last *Tᵤₚ* überschritten wird und die momentane Last für eine vorgebbare Zeitspanne Δ*t₂* höher ist als diese vorgegebene Last *Tᵤₚ.*

Vorteilhaft sind Ausführungsformen des Verfahrens, bei denen die Zylinder in der Art betrieben werden, dass sich ein Gesamtluftverhältnis λ*_{ges}* ≈ *1* einstellt.

Weitere vorteilhafte Ausführungsformen des Verfahrens werden in Zusammenhang mit den Unteransprüchen erörtert.

Vorteilhaft sind Ausführungsformen des Verfahrens, bei denen die vorgebbare Last *T_{down}* und/oder *Tᵤₚ* von der Drehzahl *n* der Brennkraftmaschine abhängig ist.

Dann gibt es nicht nur eine konkrete Last, bei deren Unterschreiten unabhängig von der Drehzahl der mindestens eine Zylinder der zweiten Gruppe abgeschaltet wird. Vielmehr wird drehzahlabhängig vorgegangen und ein Teillastbereich im Kennfeld definiert, in dem eine Teilabschaltung vorgenommen wird.

Grundsätzlich können weitere Betriebsparameter der Brennkraftmaschine als Kriterium für eine Teilabschaltung herangezogen werden, beispielsweise die Motortemperatur oder die Kühlmitteltemperatur nach einem Kaltstart der Brennkraftmaschine

Vorteilhaft sind Ausführungsformen des Verfahrens, bei denen der mindestens eine Zylinder der zweiten Gruppe stöchiometrisch betrieben wird.

Der stöchiometrische Betrieb hat erhebliche Vorteile im Hinblick auf die Abgasnachbehandlung und den Einsatz eines Dreiwegekatalysators, der einen in engen Grenzen ablaufenden stöchiometrischen Betrieb (λ ≈ 1) des Ottomotors erfordert. Dabei ergibt sich das hier relevante Gesamtluftverhältnis aus den Ladeluftmassen und den Kraftstoffmengen, die der Gesamtheit der Zylinder der Brennkraftmaschine zugeführt werden, so dass selbst ein leicht angefetteter Betrieb der Zylinder der ersten Gruppe unschädlich für den Betrieb eines Dreiwegekatalysators ist.

Vorteilhaft sind Ausführungsformen des Verfahrens, bei denen die Kraftstoffversorgung eines abgeschalteten Zylinders und/oder die Fremdzündung eines abgeschalteten Zylinders deaktiviert werden.

Grundsätzlich könnte die Kraftstoffversorgung eines abgeschalteten Zylinders aufrechterhalten werden und die Abschaltung eines Zylinders allein durch Deaktivierung der Fremdzündung vorgenommen werden. Dies wäre aber überaus nachteilig in Bezug auf den Kraftstoffverbrauch und die Schadstoffemissionen und würde der Zielsetzung, die mit der Teilabschaltung verfolgt wird, nämlich den Kraftstoffverbrauch zu mindern und den Wirkungsgrad zu verbessern, zuwiderlaufen.

Daher ist es besonders vorteilhaft, entsprechend der in Rede stehenden Verfahrensvariante bei Teilabschaltung im Teillastbetrieb die Kraftstoffzufuhr zu einem abgeschalteten Zylinder der Brennkraftmaschine zu unterbinden, wodurch dieser gesichert außer Betrieb gesetzt wird. Auf diese Weise wird auch verhindert, dass sich eingebrachter Kraftstoff - auch bei ausbleibender Fremdzündung - aufgrund der hohen Temperaturen der Brennrauminnenwände bzw. der restlichen Verbrennungsgase im Zylinder ungewollt selbst entzündet.

Die angesaugte Ladeluft kann dabei nach wie vor den abgeschalteten Zylinder durchströmen, wobei aufgrund des fehlenden Kraftstoffeintrages kein brennfähiges bzw. zündfähiges Kraftstoff-Luft-Gemisch bereitsteht und folglich - auch bei Einleitung des Zündfunkens - keine Zündung bzw. keine Verbrennung in diesem Zylinder stattfindet.

Der abgeschaltete Zylinder trägt während der Teilabschaltung grundsätzlich nicht zur Leistungsabgabe der Brennkraftmaschine bei. Wird die Ladeluftzufuhr nicht abgesperrt, sondern aufrechterhalten, nimmt die dem abgeschalteten Zylinder zugeführten Luft an den vier Arbeitstakten - Ansaugen, Komprimieren, Expandieren und Ausschieben - weiterhin teil, so dass der abgeschaltete Zylinder nicht nur keine Leistung abgibt, sondern vielmehr Arbeit für den Ladungswechsel in diesem Zylinder investiert werden muß, was den Wirkungsgrad verschlechtert, d. h. thermodynamisch nachteilig ist. Daher können Verfahrensvarianten vorteilhaft sein, bei denen die Luftzufuhr zu einem abgeschalteten Zylinder unterbunden wird.

Vorteilhaft sind Ausführungsformen des Verfahrens, bei denen die Fremdzündung eines abgeschalteten Zylinders deaktiviert wird.

Wie bereits weiter oben ausgeführt wurde, kann ein Zylinder strenggenommen allein durch die Deaktivierung der Kraftstoffversorgung abgeschaltet werden, da bei ausbleibenden Kraftstoffeintrag überhaupt kein zündfähiges Kraftstoff-Luft-Gemisch bereitsteht, welches durch Einleiten eines Zündfunkens gezündet und verbrannt werden könnte.

Nichtsdestotrotz ist es - auch bei deaktivierter Kraftstoffversorgung - besonders vorteilhaft, einen Zylinder durch Deaktivieren der Fremdzündung abzuschalten bzw. die Fremdzündung eines abgeschalteten Zylinders zu deaktivieren und damit eine ungewollte Entzündung, beispielsweise von im Zylinder verbliebenen Restgasen, sicher zu vermeiden.

Vorteilhaft sind Ausführungsformen, bei denen die mindestens zwei Zylinder zwei Gruppen mit jeweils mindestens einem Zylinder bilden. Zwei Zylindergruppen haben gegenüber Ausführungsformen mit mehreren Zylindergruppen den Vorteil, dass die Steuerung bzw. Regelung der Teilabschaltung weniger komplex ist. Zudem ist zu berücksichtigen, dass die Realisierung eines Massen- und Momentausgleichs, der vorzugsweise ebenfalls in Teilen zuschaltbar ist, infolge der unterschiedlichen Zylindervolumina *Vᵢ* erschwert wird und der Aufwand hierfür mit der Zunahme der Anzahl an Zylindergruppen deutlich steigt.

Vorteilhaft sind Ausführungsformen, bei denen der mindestens eine Zylinder der ersten Gruppe ein Zylindervolumen *V₁* aufweist und der mindestens eine Zylinder der zweiten Gruppe ein Zylindervolumen *V₂* aufweist mit 1 *· V₁* < *V₂* < *2* · *V₁.*

Vorteilhaft sind auch Ausführungsformen, bei denen der mindestens eine Zylinder der ersten Gruppe ein Zylindervolumen *V₁* aufweist und der mindestens eine Zylinder der zweiten Gruppe ein Zylindervolumen *V₂* aufweist mit *1.3* · *V₁* < *V₂* < *2 · V₁*.

Vorteilhaft sind auch Ausführungsformen, bei denen der mindestens eine Zylinder der ersten Gruppe ein Zylindervolumen *V₁* aufweist und der mindestens eine Zylinder der zweiten Gruppe ein Zylindervolumen *V₂* aufweist mit *1.3 · V₁* < *V₂* < *1.75* · *V₁.*

Die ständig in Betrieb befindlichen Zylinder der ersten Gruppe haben ein kleineres, vorzugsweise ein deutlich kleineres Zylindervolumen *V₁*, so dass die Drosselklappe bei Teilabschaltung zum Einbringen der Ladeluft in diese Zylinder bereits im unteren Teillastbereich weiter bzw. vollständig geöffnet werden kann, wodurch eine weitgehende Entdrosselung der Brennkraftmaschine bereits im unteren Teillastbereich erzielt wird.

Die ständig in Betrieb befindlichen Zylinder der ersten Gruppe arbeiten dann bei Teilabschaltung bereits im unteren Teillastbereich der Brennkraftmaschine bei höheren Lasten, die durch einen niedrigen spezifischen Kraftstoffverbrauch gekennzeichnet sind. Die Brennkraftmaschine weist folglich im unteren Teillastbereich einen spürbar höheren Wirkungsgrad η auf.

Vorteilhaft sind Ausführungsformen, bei denen der mindestens eine Zylinder der ersten Gruppe ein Verdichtungsverhältnis ε*₁* aufweist und der mindestens eine Zylinder der zweiten Gruppe ein Verdichtungsverhältnis ε*₂* aufweist mit ε*₂* + *1* < ε*₁*.

Vorteilhaft sind auch Ausführungsformen, bei denen der mindestens eine Zylinder der ersten Gruppe ein Verdichtungsverhältnis ε*₁* aufweist und der mindestens eine Zylinder der zweiten Gruppe ein Verdichtungsverhältnis ε*₂* aufweist mit ε*₂* +*1.5* < ε*₁.*

Vorteilhaft sind ebenfalls Ausführungsformen, bei denen der mindestens eine Zylinder der ersten Gruppe ein Verdichtungsverhältnis ε*₁* aufweist und der mindestens eine Zylinder der zweiten Gruppe ein Verdichtungsverhältnis ε*₂* aufweist mit ε*₂* +*2* < ε*₁*.

Während die drei vorstehenden Ausführungsformen auf den relativen Unterschied im Verdichtungsverhältnis Δε*ᵢ* abstellen, haben die folgenden Ausführungsformen das absolute Verdichtungsverhältnis ε*ᵢ* der beiden Gruppen zum Gegenstand.

Vorteilhaft sind Ausführungsformen, bei denen der mindestens eine Zylinder der zweiten Gruppe ein Verdichtungsverhältnis ε*₂* aufweist mit *9* < ε*₂* < *11*.

Vorteilhaft sind Ausführungsformen, bei denen der mindestens eine Zylinder der ersten Gruppe ein Verdichtungsverhältnis ε*₁* aufweist mit *11.5* < ε*₁* < *14.5*.

Vorteilhaft sind Ausführungsformen, bei denen jeder Zylinder zur Einleitung der Fremdzündung mit einer Zündkerze ausgestattet ist. Die Zündkerze ist eine Zündvorrichtung zur sicheren Einleitung eines Zündfunkens, welche auch über die notwendige Standfestigkeit verfügt und zudem kostengünstig ist. Nichtsdestotrotz können auch andere Zündvorrichtungen zur Einleitung der Fremdzündung eingesetzt werden.

Vorteilhaft sind Ausführungsformen, bei denen eine regelbare Drosselklappe zur Laststeuerung vorgesehen ist. Ein Vorteil der regelbaren Drosselklappe ist es, dass beim Aktivieren bzw. Deaktivieren der Teilabschaltung, d. h. eines Zylinders, das Drehmoment des Motors nicht abfällt bzw. ansteigt und der Fahrer das Gaspedal nicht nachführen muß, um die Last zu halten, was bei nicht regelbarer Drosselklappe der Fall wäre.

Vorzugsweise ist die regelbare Drosselklappe eine elektronisch geregelte Drosselklappe und eine Motorsteuerung übernimmt die Regelung dieser Drosselklappe. Diese Ausführungsform ist auch im Hinblick auf die Kosten zu bevorzugen. Vorteilhaft sind dabei Ausführungsformen, bei denen die Drosselklappe in einem Closed-Loop-Verfahren regelbar ist.

Vorteilhaft sind Ausführungsformen, bei denen jeder Zylinder zum Zwecke einer Kraftstoffversorgung mittels Direkteinspritzung mit einer Einspritzdüse ausgestattet ist.

Zum einen ist die direkte Einspritzung des Kraftstoffes in die Zylinder, wie die Teilabschaltung selbst und wie weiter oben bereits ausführlich erörtert, ein geeignetes Mittel zur Entdrosselung der Brennkraftmaschine, so dass sich die beiden Maßnahmen, nämlich die Teilabschaltung einerseits und die Direkteinspritzung andererseits, bei der Entdrosselung gegenseitig unterstützen und ergänzen.

Zum anderen gestattet die Direkteinspritzung ein Abschalten und Zuschalten der Kraftstoffversorgung von Arbeitsspiel zu Arbeitsspiel. Die Direkteinspritzung gewährleistet eine effektive und sichere Abschaltung des mindestens einen zuschaltbaren Zylinders, wobei angestrebt wird, die Kraftstoffzufuhr von einem zum nächsten Arbeitsspiel möglichst vollständig zu unterbinden; dies auch insbesondere im Hinblick auf den Kraftstoffverbrauch und die Schadstoffemissionen.

Nichtsdestotrotz können Ausführungsformen vorteilhaft sein, bei denen zum Zwecke einer Kraftstoffversorgung eine Saugrohreinspritzung vorgesehen ist.

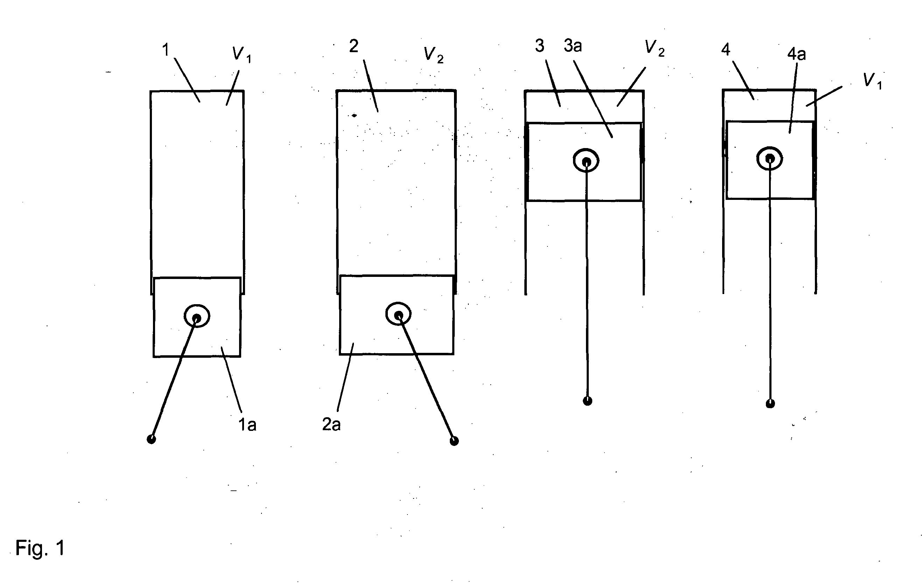

Im Folgenden wird die Erfindung anhand einer Ausführungsform der fremdgezündeten Brennkraftmaschine gemäß der Figur 1 näher erläutert. Hierbei zeigt:
- Fig. 1: schematisch die Zylinder einer ersten Ausführungsform der fremdgezündeten Brennkraftmaschine.

Figur 1 zeigt schematisch die vier Zylinder 1, 2, 3, 4 eines fremdgezündeten Vierzylinder-Reihenmotors.

Die vier in Reihe angeordneten Zylinder 1, 2, 3, 4 bilden zwei Zylindergruppen mit jeweils zwei Zylindern 1, 2, 3, 4, wobei die erste Gruppe die außenliegenden Zylinder 1, 4 und die zweite Gruppe die innenliegenden Zylinder 2, 3 umfaßt. Bei der gezeigten Momentaufnahme befinden sich die Kolben 1a, 2a des ersten und des zweiten Zylinders 1, 2 im unteren Totpunkt und die Kolben 3a, 4a des dritten und des vierten Zylinders 3, 4 im oberen Totpunkt.

Die beiden Zylindergruppen zeichnen sich durch unterschiedliche Zylindervolumen *Vᵢ* aus, wobei die Zylinder 1, 4 der ersten Gruppe ein Zylindervolumen *V₁* aufweisen und die Zylinder 2, 3 der zweiten Gruppe ein Zylindervolumen *V₂* aufweisen mit *V₂* > *V₁*.

Die Zylinder 2, 3 der zweiten Gruppe sind dabei als zuschaltbare Zylinder 2, 3 ausgebildet, die im Teillastbetrieb bei Unterschreiten einer vorgebbaren Last abgeschaltet werden. Dadurch erhöht sich die Lastanforderung an die weiter in Betrieb befindlichen Zylinder 1, 4 der ersten Gruppe und ein weitergehendes Öffnen einer im Ansaugsystem zur Laststeuerung vorgesehenen Drosselklappe zum Einbringen einer größeren Ladeluftmasse in diese Zylinder 1, 4 wird erforderlich, um die Lastanforderung zu erfüllen. Das Resultat ist eine Entdrosselung der Brennkraftmaschine im Teillastbetrieb.

Dadurch, dass die durchgehend in Betrieb befindlichen Zylinder 1, 4 der ersten Gruppe ein kleineres Zylindervolumen *V₁* aufweisen, erfolgt eine spürbare Entdrosselung der Brennkraftmaschine bereits im unteren Teillastbereich, da die Drosselklappe bei Teilabschaltung zum Einbringen von Ladeluft in die kleineren Zylinder 1, 4 bereits bei sehr niedrigen Lasten weiter bzw. vollständig geöffnet wird.

### Bezugszeichen

- 1: erster Zylinder
- 1a: Kolben des ersten Zylinders
- 2: zweiter Zylinder
- 2a: Kolben des zweiten Zylinders
- 3: dritter Zylinder
- 3a: Kolben des dritten Zylinders
- 4: vierter Zylinder
- 4a: Kolben des vierten Zylinders

- *εᵢ*: Verdichtungsverhältnis eines Zylinders bzw. einer Gruppe von Zylindern
- *ε₁*: Verdichtungsverhältnis einer ersten Gruppe von Zylindern
- *ε₂*: Verdichtungsverhältnis einer zweiten Gruppe von zuschaltbaren Zylindern
- *λ*: Luftverhältnis
- *λ₁*: Luftverhältnis einer ersten Gruppe von Zylindern
- *λ₂*: Luftverhältnis einer zweiten Gruppe von zuschaltbaren Zylindern
- *η*: Wirkungsgrad

- *n*: Drehzahl der Brennkraftmaschine
- *T*: Last
- *T_{down}*: vorgebbare Last für das Unterschreiten einer Last
- *T_{high}*: Last im hohen Lastbereich
- *T_{max,n}*: maximale Last bei einer vorliegenden Drehzahl *n*
- *Tᵤₚ*: vorgebbare Last für das Überschreiten einer Last
- *Vᵢ*: Zylindervolumen
- *V₁*: Zylindervolumen einer ersten Gruppe von Zylindern
- *V₂*: Zylindervolumen einer zweiten Gruppe von zuschaltbaren Zylindern

## Patentansprüche

1. Verfahren zum Betreiben einer fremdgezündeten Brennkraftmaschine mit mindestens zwei Zylindern (1, 2, 3, 4), bei der mindestens zwei Zylinder (1, 2, 3,4) in der Art konfiguriert sind, dass sie mindestens zwei Gruppen mit jeweils mindestens einem Zylinder (1, 2, 3, 4) bilden, wobei
- der mindestens eine Zylinder (2, 3) mindestens einer Gruppe als lastabhängig zuschaltbarer Zylinder (2, 3) ausgebildet ist, der bei Unterschreiten einer vorgebbaren Last abgeschaltet ist,
- sich die mindestens zwei Gruppen durch unterschiedliche Zylindervolumen *Vᵢ* auszeichnen,
- der mindestens eine Zylinder (1,4) einer ersten Gruppe ein Zylindervolumen *V₁* aufweist und der mindestens eine Zylinder (2, 3) einer zweiten Gruppe ein Zylindervolumen *V₂* aufweist mit *V₂* > *V₁*, und
- der mindestens eine Zylinder (2, 3) der zweiten Gruppe als zuschaltbarer Zylinder ausgebildet ist,
bei dem der mindestens eine Zylinder (2, 3) der zweiten Gruppe
- bei Unterschreiten einer vorgebbaren Last *T_{down}* abgeschaltet wird, und
- bei Überschreiten einer vorgebbaren Last *Tᵤₚ* zugeschaltet wird,
**dadurch gekennzeichnet, dass**
- sich die mindestens zwei Gruppen durch unterschiedliche Verdichtungsverhältnisse ε*ᵢ* auszeichnen, wobei der mindestens eine Zylinder (1, 4) der ersten Gruppe ein Verdichtungsverhältnis ε*₁* aufweist und der mindestens eine Zylinder (2, 3) der zweiten Gruppe ein Verdichtungsverhältnis ε*₂* aufweist mit ε*₂* < ε*₁*,
- das Luftverhältnis λ zumindest einer Zylindergruppe zu hohen Lasten *T_{high}* hin verringert wird, wobei eine hohe Last *T_{high}* eine Last ist, die 70% oder mehr der maximalen Last *T_{max,n}* bei der vorliegenden Drehzahl *n* beträgt und das Luftverhältnis λ durch Erhöhung der eingespritzten Kraftstoffmenge verringert wird, und
- die Zylinder (1, 2, 3, 4) der mindestens zwei Zylindergruppen zumindest in einem Lastbereich mit einem unterschiedlich großen Luftverhältnis λ betrieben werden, wobei der mindestens eine Zylinder (1, 4) der ersten Gruppe mit einem Luftverhältnis λ*₁* betrieben wird und der mindestens eine Zylinder (2, 3) der zweiten Gruppe mit einem Luftverhältnis λ*₂* > λ*₁* betrieben wird.

2. Verfahren nach Anspruch 1, **dadurch gekennzeichnet, dass** die vorgebbare Last *T_{down}* und/oder *Tᵤₚ* von der Drehzahl n der Brennkraftmaschine abhängig ist.

3. Verfahren nach einem der vorherigen Ansprüche, **dadurch gekennzeichnet, dass** der mindestens eine Zylinder (2, 3) der zweiten Gruppe stöchiometrisch betrieben wird.

4. Verfahren nach einem der vorherigen Ansprüche, **dadurch gekennzeichnet, dass** die Kraftstoffversorgung eines abgeschalteten Zylinders (2, 3) und/oder die Fremdzündung eines abgeschalteten Zylinders (2, 3) deaktiviert wird.

5. Verfahren nach einem der vorherigen Ansprüche, **dadurch gekennzeichnet, dass** die mindestens zwei Zylinder (1, 2, 3, 4) zwei Gruppen mit jeweils mindestens einem Zylinder (1, 2, 3, 4) bilden.

6. Verfahren nach einem der vorherigen Ansprüche, **dadurch gekennzeichnet, dass** der mindestens eine Zylinder (1, 4) der ersten Gruppe ein Zylindervolumen *V₁* aufweist und der mindestens eine Zylinder (2, 3) der zweiten Gruppe ein Zylindervolumen *V₂* aufweist mit *1* · *V₁* < *V₂* < *2* · *V₁.*

7. Verfahren nach einem der vorherigen Ansprüche, **dadurch gekennzeichnet, dass** der mindestens eine Zylinder (1, 4) der ersten Gruppe ein Zylindervolumen *V₁* aufweist und der mindestens eine Zylinder (2, 3) der zweiten Gruppe ein Zylindervolumen *V₂* aufweist mit *1.3* · *V₁* < *V₂* < *2 · V₁.*

8. Verfahren nach einem der vorherigen Ansprüche, **dadurch gekennzeichnet, dass** der mindestens eine Zylinder (1, 4) der ersten Gruppe ein Verdichtungsverhältnis ε*₁* aufweist und der mindestens eine Zylinder (2, 3) der zweiten Gruppe ein Verdichtungsverhältnis ε*₂* aufweist mit ε*₂* + *1* < ε*₁*.

9. Verfahren nach einem der vorherigen Ansprüche, **dadurch gekennzeichnet, dass** der mindestens eine Zylinder (1, 4) der ersten Gruppe ein Verdichtungsverhältnis ε*₁* aufweist und der mindestens eine Zylinder (2, 3) der zweiten Gruppe ein Verdichtungsverhältnis ε*₂* aufweist mit ε*₂* +*1.5* < ε*₁.*

10. Verfahren nach einem der vorherigen Ansprüche, **dadurch gekennzeichnet, dass** der mindestens eine Zylinder (2, 3) der zweiten Gruppe ein Verdichtungsverhältnis ε*₂* aufweist mit *9* < e*₂* < *11*.

11. Verfahren nach einem der vorherigen Ansprüche, **dadurch gekennzeichnet, dass** der mindestens eine Zylinder (1, 4) der ersten Gruppe ein Verdichtungsverhältnis ε*₁* aufweist mit *11.5* < ε*₁* < *14.5.*

## Claims

1. Method for operating an applied-ignition internal combustion engine having at least two cylinders (1, 2, 3, 4), in which at least two cylinders (1, 2, 3, 4) are configured so as to form at least two groups with in each case at least one cylinder (1, 2, 3, 4),
- the at least one cylinder (2, 3) of at least one group being formed as a cylinder (2, 3) which can be activated in a load-dependent manner and which is deactivated if a predefinable load is undershot,
- the at least two groups being **characterized by** different cylinder volumes *Vᵢ*,
- the at least one cylinder (1, 4) of a first group having a cylinder volume *V₁* and the at least one cylinder (2, 3) of a second group having a cylinder volume *V₂*, where *V₂* > *V₁,* and
- the at least one cylinder (2, 3) of the second group being formed as an activatable cylinder, in which the at least one cylinder (2, 3) of the second group
- is deactivated if a predefinable load *T_{down}* is undershot, and
- is activated if a predefinable load *Tᵤₚ* is exceeded,
**characterized in that**
- the at least two groups are **characterized by** different compression ratios ε*ᵢ*, the at least one cylinder (1, 4) of the first group having a compression ratio ε*₁* and the at least one cylinder (2, 3) of the second group having a compression ratio ε*₂*, where ε*₂* < ε*₁*, the air ratio λ of at least one cylinder group is reduced toward high loads *T_{high},* a high load *T_{high}* being a load which amounts to 70% or more of the maximum load *T_{max,n}* at the present rotational speed n, and the air ratio λ is reduced by means of an increase in the injected fuel quantity, and the cylinders (1, 2, 3, 4) of the at least two cylinder groups are operated with a different air ratio λ at least in one load range, the at least one cylinder (1, 4) of the first group being operated with an air ratio λ*₁* and the at least one cylinder (2, 3) of the second group being operated with an air ratio λ*₂* > λ*₁*.

2. Method according to Claim 1, **characterized in that** the predefinable load *T_{down}* and/or *Tᵤₚ* is dependent on the rotational speed *n* of the internal combustion engine.

3. Method according to one of the preceding claims, **characterized in that** the at least one cylinder (2, 3) of the second group is operated stoichiometrically.

4. Method according to one of the preceding claims, **characterized in that** the fuel supply of a deactivated cylinder (2, 3) and/or the applied ignition of a deactivated cylinder (2, 3) is deactivated.

5. Method according to one of the preceding claims, **characterized in that** the at least two cylinders (1, 2, 3, 4) form two groups with in each case at least one cylinder (1, 2, 3, 4).

6. Method according to one of the preceding claims, **characterized in that** the at least one cylinder (1, 4) of the first group has a cylinder volume *V₁* and the at least one cylinder (2, 3) of the second group has a cylinder volume *V₂*, where *1 · V₁* < *V₂ < 2* · *V₁.*

7. Method according to one of the preceding claims, **characterized in that** the at least one cylinder (1, 4) of the first group has a cylinder volume *V₁* and the at least one cylinder (2, 3) of the second group has a cylinder volume *V₂*, where *1.3* · *V₁* < *V₂* < *2* · *V₁*.

8. Method according to one of the preceding claims, **characterized in that** the at least one cylinder (1, 4) of the first group has a compression ratio ε*₁* and the at least one cylinder (2, 3) of the second group has a compression ratio ε*₂*, where ε*₂ +1* < ε*₁.*

9. Method according to one of the preceding claims, **characterized in that** the at least one cylinder (1, 4) of the first group has a compression ratio ε*₁* and the at least one cylinder (2, 3) of the second group has a compression ratio ε*₂*, where ε*₂* +*1.5* < ε₁.

10. Method according to one of the preceding claims, **characterized in that** the at least one cylinder (2, 3) of the second group has a compression ratio ε*₂*, where *9* < ε*₂* < *11*.

11. Method according to one of the preceding claims, **characterized in that** the at least one cylinder (1, 4) of the first group has a compression ratio ε*₁*, where *11.5* < ε*₁* < *14.5*.

## Revendications

1. Procédé pour faire fonctionner un moteur à combustion interne à allumage commandé, comprenant au moins deux cylindres (1, 2, 3, 4), au moins deux cylindres (1, 2, 3, 4) étant configurés de telle sorte qu'ils forment au moins deux groupes avec à chaque fois au moins un cylindre (1, 2, 3, 4),
- l'au moins un cylindre (2, 3) d'au moins un groupe étant réalisé en tant que cylindre (2, 3) pouvant être commuté en fonction de la charge, qui est déconnecté lors du passage en dessous d'une charge prédéfinissable,
- les au moins deux groupes **se caractérisant par** des volumes de cylindre différents Vᵢ,
- l'au moins un cylindre (1, 4) d'un premier groupe présentant un volume de cylindre V₁ et l'au moins un cylindre (2, 3) d'un deuxième groupe présentant un volume de cylindre V₂, avec V₂ > V₁, et
- l'au moins un cylindre (2, 3) du deuxième groupe étant réalisé sous forme de cylindre commutable,
l'au moins un cylindre (2, 3) du deuxième groupe
- étant déconnecté lors du passage en dessous d'une charge prédéfinissable T_{down}, et
- étant commuté lors du dépassement d'une charge prédéfinissable Tᵤₚ,
**caractérisé en ce que**
- les au moins deux groupes se caractérisent par des rapports de compression différents εᵢ, l'au moins un cylindre (1, 4) du premier groupe présentant un rapport de compression ε₁ et l'au moins un cylindre (2,3) du deuxième groupe présentant un rapport de compression ε₂, avec ε₂ < ε₁,
- le rapport d'air λ d'au moins un groupe de cylindres est réduit vers des charges élevées T_{high}, une charge élevée T_{high} étant une charge qui vaut 70 % ou plus de la charge maximale T-_{max,n} au régime actuel n et le rapport d'air λ est réduit par augmentation de la quantité de carburant injectée, et
- les cylindres (1, 2, 3, 4) des au moins deux groupes de cylindres fonctionnent au moins dans une plage de charge avec un rapport d'air différent λ, l'au moins un cylindre (1, 4) du premier groupe fonctionnant avec un rapport d'air λ₁ et l'au moins un cylindre (2, 3) du deuxième groupe fonctionnant avec un rapport d'air λ₂ > λ₁.

2. Procédé selon la revendication 1, **caractérisé en ce que** la charge prédéfinissable T_{down} et/ou Tᵤₚ dépend du régime n du moteur à combustion interne.

3. Procédé selon l'une quelconque des revendications précédentes, **caractérisé en ce que** l'au moins un cylindre (2, 3) du deuxième groupe fonctionne de manière stoechiométrique.

4. Procédé selon l'une quelconque des revendications précédentes, **caractérisé en ce que** l'alimentation en carburant d'un cylindre déconnecté (2, 3) et/ou l'allumage commandé d'un cylindre déconnecté (2, 3) sont désactivés.

5. Procédé selon l'une quelconque des revendications précédentes, **caractérisé en ce que** les au moins deux cylindres (1, 2, 3, 4) forment deux groupes ayant à chaque fois au moins un cylindre (1, 2, 3, 4).

6. Procédé selon l'une quelconque des revendications précédentes, **caractérisé en ce que** l'au moins un cylindre (1, 4) du premier groupe présente un volume de cylindre V₁ et l'au moins un cylindre (2, 3) du deuxième groupe présente un volume de cylindre V₂ avec 1 · V₁ < V₂ < 2 · V₁.

7. Procédé selon l'une quelconque des revendications précédentes, **caractérisé en ce que** l'au moins un cylindre (1, 4) du premier groupe présente un volume de cylindre V₁ et l'au moins un cylindre (2, 3) du deuxième groupe présente un volume de cylindre V₂ avec 1,3 · V₁ < V₂ < 2 · V₁.

8. Procédé selon l'une quelconque des revendications précédentes, **caractérisé en ce que** l'au moins un cylindre (1, 4) du premier groupe présente un rapport de compression ε₁ et l'au moins un cylindre (2, 3) du deuxième groupe présente un rapport de compression ε₂ avec ε₂ + 1 < ε₁.

9. Procédé selon l'une quelconque des revendications précédentes, **caractérisé en ce que** l'au moins un cylindre (1, 4) du premier groupe présente un rapport de compression λ₁ et l'au moins un cylindre (2, 3) du deuxième groupe présente un rapport de compression ε₂ avec ε₂ + 1,5 < ε₁.

10. Procédé selon l'une quelconque des revendications précédentes, **caractérisé en ce que** l'au moins un cylindre (2, 3) du deuxième groupe présente un rapport de compression ε₂ avec 9 < ε₂ < 11.

11. Procédé selon l'une quelconque des revendications précédentes, **caractérisé en ce que** l'au moins un cylindre (1, 4) du premier groupe présente un rapport de compression ε₁ avec 11,5 < ε₁ < 14,5.
